# EUROPEAN PATENT SPECIFICATION

(11) **EP 3 745 383 B1**
(45) Date of publication and mention of the grant of the patent: **12.07.2023**
(21) Application number: 19176838.1
(22) Date of filing: 27.05.2019
(51) Int. Cl.: G09B 9/54, G06N 3/08

(54) **METHOD AND SYSTEM FOR GENERATING RADAR REFLECTION POINTS**
VERFAHREN UND SYSTEM ZUR ERZEUGUNG VON RADARREFLEXIONSPUNKTEN
PROCÉDÉ ET SYSTÈME DE GÉNÉRATION DE POINTS DE RÉFLEXION RADAR

(43) Date of publication of application: 02.12.2020
(73) Proprietor: Robert Bosch GmbH, 70442 Stuttgart (DE)
(72) Inventor: Anka, Laszlo, 1165 Budapest (HU); Ebert, Jasmin, 71277 Rutesheim (DE); Timm, Fabian, 71272 Renningen (DE); Yang, Chun, 1071 Budapest (HU); Muenzner, Sebastian, 71229 Leonberg (DE); Karasz, Zoltan, 1141 Budapest (HU)

(56) References cited:
- US-A1- 2017 364 776
- US-A1- 2018 060 725
- US-A1- 2018 349 526

## Description

The present invention relates to a method and a system for generating radar reflection points as well as a computer program comprising instructions which, when the program is executed by a computer, cause the computer to carry out the method.

### Description of the Prior Art

Radar simulation is important for radar function development and verification purposes, such as driver assistance, sensor fusion and automated driving at a vehicle. Existing radar models are typically black- or white-box. Black-box models represent radar return in a stochastic manner. White-box models use ray-tracing for estimating electromagnetic path propagation and typically rely on object radar cross section values being given, or for extracting virtual scattering centers as e.g. introduced in the article "Extraction of virtual scattering centers of vehicles by ray-tracing simulations" by K. Schuler et al.. White-box models require detailed models of environment to capture important radar-related effects such as multipath propagation and interference. However, models with sufficient details are often not available, and the extensive computations which are required accordingly render a real-time simulation infeasible.

A deep stochastic radar model ("DSRM" hereafter) has been proposed for automotive radar simulations in the article "Deep Stochastic Radar Models" by Tim A. et al. which consists of a plurality of sub-models. DSRM allows for arbitrary roadway configurations and scene composition through the use of a terrain raster grid and an object list as inputs. DSRM produces power return fields that exhibit radar phenomena without explicit programming and runs in real-time. Although DSRM demonstrates the advantage of neural networks in radar data processing, there is still one drawback that the application of this model is limited in real radar devices due to the fact that the input and output of this model are special raw data, i.e., the data before the ambiguity resolution, clustering and/or object tracking. In this regard, these raw data are unable to be directly used for further development of radar simulation functions.

US 2018/060725 A1 describes a machine learning module which generates distribution from training data including labeled modeling data correlated with reflection data. The modeling data may include data from a LIDAR system, camera and/or a GPS for a target environment/object. The reflection data may be collected from the same environment/object by a radar a probability and/or an ultrasonic system.

### Disclosure of the Invention

The present invention provides a method for generating radar reflection points according to claim 1, a system for generating radar reflection points according to claim 8 and a computer program according to claim 9.

Further advantageous embodiments and improvements of the invention are listed in the dependent claims.

### Advantages of the Invention

The invention provides, according to a first aspect, a method for generating radar reflection points comprising the steps of: providing a plurality of predefined radar reflection points of at least one first object detected by a radar and at least one first scenario description describing a first environment related to the detected first object; converting the predefined radar reflection points into at least one first power distribution pattern image related to a distribution of a power returning from the detected first object; training a model based on the first power distribution pattern image and the first scenario description; providing at least one second scenario description describing a second environment related to a second object; generating at least one second power distribution pattern image related to a distribution of a power returning from the second object based on the trained model and the second scenario description; and sampling the second power distribution pattern image.

It is favorable that by means of the inventive method, radar simulation used for outputting the final detection results of a radar, i.e., radar reflection points, is technically realized. Unlike the DSRM mentioned above to which real radar reflection points and/or object lists cannot be directly applied due to the sparseness of the spatial data, the inventive method may advantageously utilize real radar reflection points as input in order to train a model for the subsequent generation of radar reflection points.

The real radar reflection points are converted to a power distribution pattern image which is a kind of radar images. It is known that radar reflection points are the radar output after a certain signal processing performed on a raw image received by a radar. This raw image is basically a distribution of power returning to the radar. After the signal processing such as object detection, ambiguity resolution and object tracking, some information is lost. In this regard, on one hand, it is impossible to recover the radar raw image exactly, and on the other hand, it may make less sense by doing so because the radar raw image can be hardly used directly due to some ambiguities embedded in the raw image. In this case, the present method converts real radar reflection points which were obtained from a real radar raw image to a power distribution pattern image which can reflect the real power distribution received by the radar to some extent, but without any object ambiguities.

In addition, inventively, the computational complexity and costs during radar simulation processes are significantly reduced. Once the training of the model is complete, the inventive method achieves a nearly real-time generation of radar reflection points with a scenario description as an input of the trained model.

Furthermore, with the help of the inventive method, the radar simulation may adapt to arbitrary roadway topologies and scene configurations as the environment of a target object inclusive of the target object itself since the training of the model is directed to arbitrary roadway topologies and scene configurations.

In a preferable embodiment, the step of converting the predefined radar reflection points into at least one first power distribution pattern image comprises: converting each of the predefined radar reflection points into a third power distribution pattern image related to a distribution of a power returning from an area around the each of the predefined radar reflection points; and merging the third power distribution pattern images to form the first power distribution pattern image. Thereby, all the real radar reflection points as the predefined radar reflection points are converted to a power distribution pattern image which reflects the real power distribution received by the radar to some extent, but without any object ambiguities.

In a further preferable embodiment, the step of converting each of the predefined radar reflection points into a third power distribution pattern image comprises implementing a sinc function using the each of the predefined radar reflection points as the variable of the sinc function in the longitudinal and/or lateral direction corresponding to the relative position between the radar and the first object. Thereby, the generated power distribution pattern image is similar to the real power distribution image received by the radar since essentially the radar output after signal processing has a sinc form, either along the longitudinal or lateral direction. The position and value of the peak of the sinc function represent the position and the radar cross section of the reflection point, respectively. The 3dB bandwidth of the sinc function is determined by the measuring accuracy of the radar.

In a further preferable embodiment, the first and second scenario description comprise spatial data related to the first and/or second object, in particular represented by a raster, and an object list, in particular with features of the first and/or second object. The spatial data and object lists are both complex and multi-dimensional in order to e.g. capture the full space of driving scenes for a vehicle. Compared with traditional parametric radar models, the present method is able to handle such complicated inputs.

In a further preferable embodiment, the first and second scenario description are identical. Thereby, more radar reflection points are generated for the same scenario in order to e.g. increase the dataset for this scenario.

Alternatively, the second scenario description may be different from the first scenario description in order to generate radar reflection points for a new scenario. In this case, scenario characters describing a scenario indicated in the second scenario description should be used as a part of the first scenario description in the training step.

In a further preferable embodiment, the step of training the model comprises training a deep neural network. Thereby, robust hierarchical features from complicated inputs, i.e., the spatial data and object lists, can be automatically learned. Furthermore, a deep neural network is efficient to use once being trained.

According to the invention, the step of generating the second power distribution pattern image is in addition based on a noise value, in particular randomly generated. Since noises bring inaccuracies to a real radar, the inventive method generates radar reflection points exhibiting the same inaccuracies as if these radar reflection points were from a real radar. Thereby, the radar simulation is improved.

The invention further provides, according to a second aspect, a system for generating radar reflection points comprising an image conversion preparation unit configured to provide a plurality of predefined radar reflection points of at least one first object detected by a radar and at least one first scenario description describing a first environment related to the detected first object, an image conversion unit configured to convert the predefined radar reflection points into at least one first power distribution pattern image related to a distribution of a power returning from the detected first object, a training unit configured to train a model based on the first power distribution pattern image and the first scenario description, a scenario description providing unit configured to provide at least one second scenario description describing a second environment related to a second object, an image generation unit configured to generate at least one second power distribution pattern image related to a distribution of a power returning from the second object based on the trained model and the second scenario description, and a sampling unit configured to sample the second power distribution pattern image.

The invention further provides, according to a third aspect, a computer program comprising instructions which, when the program is executed by a computer, cause the computer to carry out the method according to the first aspect of the invention.

### Brief Description of the Drawings

Further advantageous details and features may be taken from the following description of several exemplary embodiments of the invention in conjunction with the drawings, in which:
- Fig. 1: shows a block diagram of an embodiment of the inventive method for generating radar reflection points;
- Fig. 2: shows a schematic representation of converted power distribution pattern images and generated power distribution pattern images using the embodiment of the inventive method according to Fig. 1;
- Fig. 3: shows a schematic representation of predefined/real radar reflection points and generated radar reflection points using the embodiment of the inventive method according to Fig. 1;
- Fig. 4: shows a block diagram of an embodiment of the inventive system for generating radar reflection points; and
- Fig. 5: shows a block diagram of an embodiment of the inventive computer program comprising instructions which, when the program is executed by a computer, cause the computer to carry out the embodiment of the inventive method according to Fig. 1.

### Embodiments of the Invention

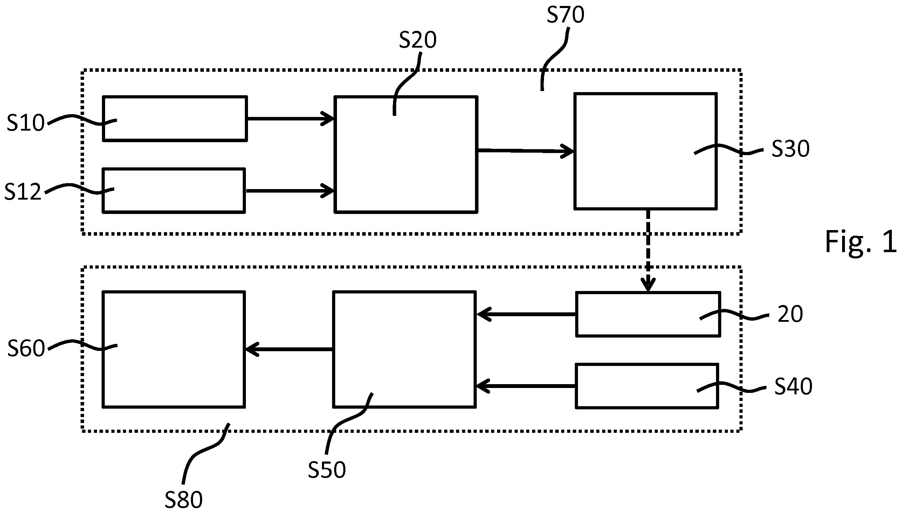

The embodiment of the inventive method for generating radar reflection points shown in Fig. 1 comprises steps S10, S12, S20, S30, S40, S50, S60. In the step S10, a plurality of predefined/real radar reflection points of at least one first object detected by a radar is provided. In the step S12, at least one first scenario description describing a first environment related to the detected first object is provided. In the step S20, the predefined/real radar reflection points are converted into at least one first power distribution pattern image related to a distribution of a power returning from the detected first object. In the step S30, a model is trained based on the first power distribution pattern image and the first scenario description. In the step S40, at least one second scenario description describing a second environment related to a second object is provided. In the step S50, at least one second power distribution pattern image related to a distribution of a power returning from the second object is generated based on the trained model and the second scenario description. In the step S60, the second power distribution pattern image is sampled to generate radar reflection points.

The steps S10, S12, S20 and S30 form a training stage S70 after which a pre-trained model 20 is generated. The steps S40, S50 and S60 form a deployment stage in order to output radar reflection points based on scenario descriptions inputted in the pre-trained model 20.

In the step S30 of the embodiment shown in Fig. 1, DSRM is applied for training due to its ability to automatically learn robust hierarchical features from complicated inputs and its high efficiency once being trained.

In the step S60 of the embodiment shown in Fig. 1, a simple random sampling is adopted. Correspondingly, the generated radar reflection points are expected in the normal/Gaussian distribution.

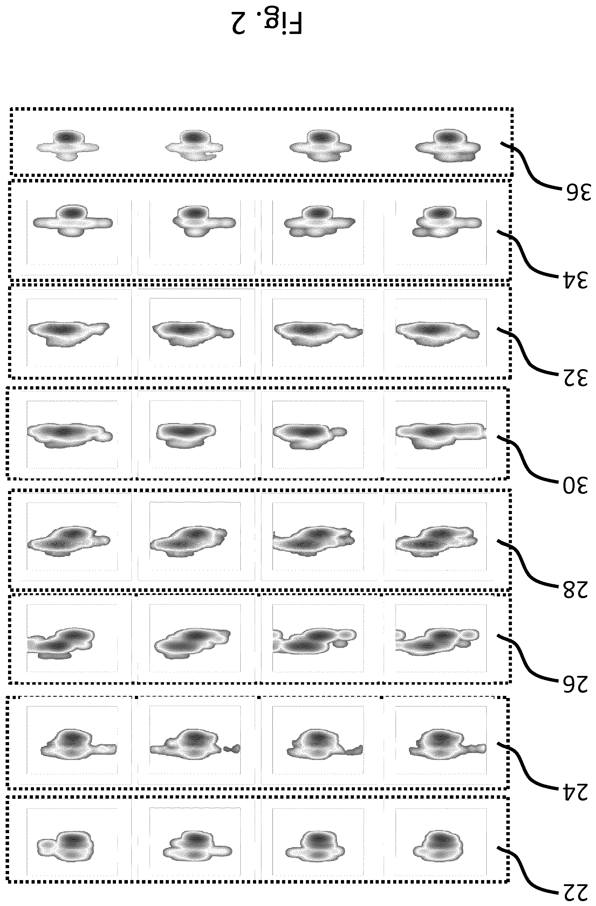

Rows 22, 26, 30, 34 shown in Fig. 2 represent power distribution pattern images converted from real radar reflection points of a vehicle as the detected object in different orientations, respectively. Rows 24, 28, 32, 36 shown in Fig. 2 represent power distribution pattern images generated using the model of the embodiment according to Fig. 1 which is trained by means of the power distribution pattern images in the Rows 22, 26, 30, 34, and using the same scenario description as the one for the previous training of the model.

By comparing row 22 with row 24, row 26 with row 28, row 30 with row 32, row 34 with row 36, it is clear that the generated power distribution pattern images have the same or at least very similar distribution as the power distribution pattern images converted from the real radar data.

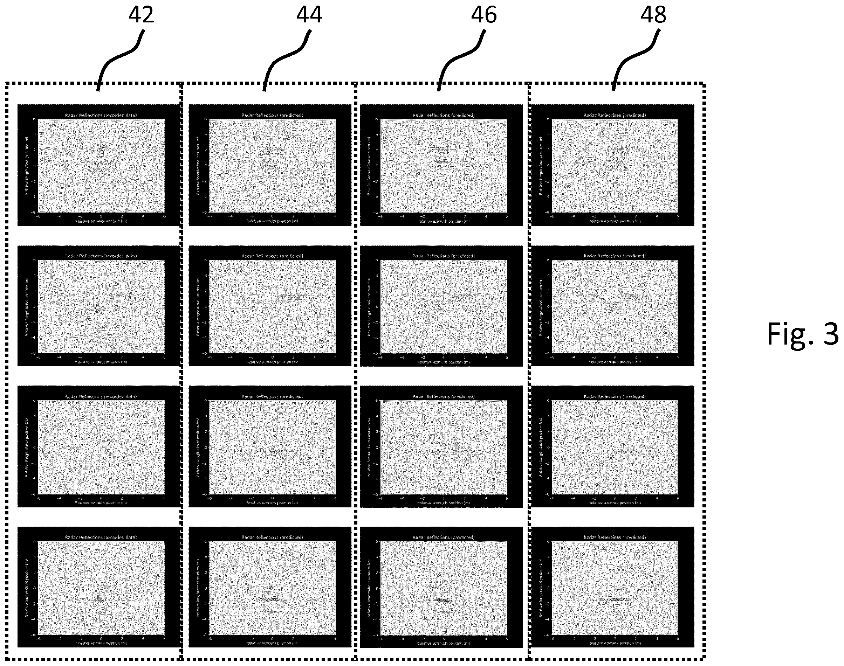

Column 42 shown in Fig. 3 represents real radar reflection points of the vehicle as the detected object in four different orientations. Columns 44, 46, 48 shown in Fig. 3 represent, respectively, radar reflection points generated by sampling the generated power distribution pattern images as the output of the trained model of the embodiment according to Fig. 1.

By comparing column 42 with column 44, 46, 48, it is clear that the inventively generated radar reflection points have the same or at least very similar distribution as the real radar data.

The embodiment of the inventive system 100 for generating radar reflection points comprises an image conversion preparation unit 2 configured to provide a plurality of predefined radar reflection points of at least one first object detected by a radar and at least one first scenario description describing a first environment related to the detected first object, an image conversion unit 4 configured to convert the predefined radar reflection points into at least one first power distribution pattern image related to a distribution of a power returning from the detected first object, a training unit 6 configured to train a model based on the first power distribution pattern image and the first scenario description, a scenario description providing unit 8 configured to provide at least one second scenario description describing a second environment related to a second object, an image generation unit 10 configured to generate at least one second power distribution pattern image related to a distribution of a power returning from the second object based on the trained model and the second scenario description, and a sampling unit 12 configured to sample the second power distribution pattern image.

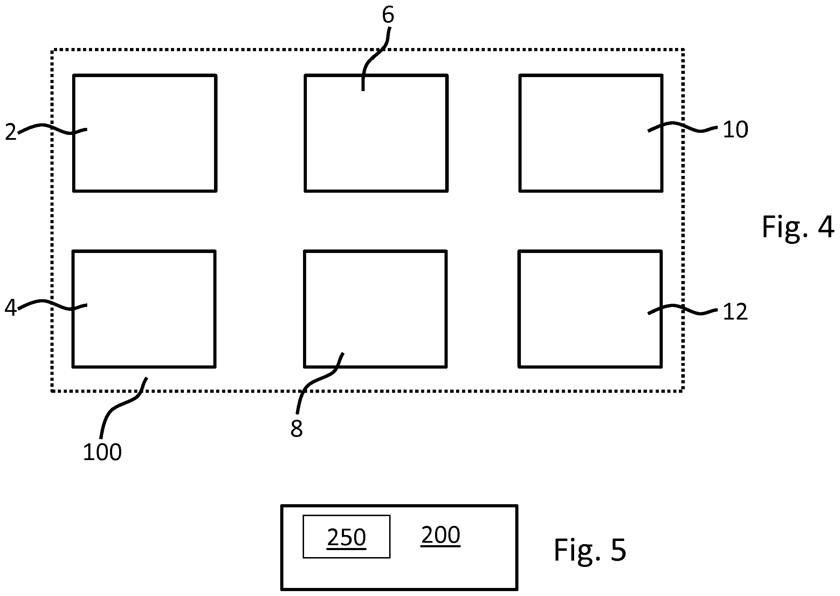

The embodiment of the inventive computer program 200 shown in Fig. 5 comprises instructions 250 which, when the program 200 is executed by a computer, cause the computer to carry out the embodiment of the inventive method shown in Fig. 1.

The invention is described and illustrated in detail by the preferable embodiments mentioned above. However, the invention is not limited by the disclosed examples, and other variations can be derived therefrom while still being inside the protection scope of the invention.

## Claims

1. Method for generating radar reflection points comprising the steps of:
providing (S10, S12) a plurality of predefined radar reflection points of at least one first object detected by a radar and at least one first scenario description describing a first environment related to the detected first object;
converting (S20) the predefined radar reflection points into at least one first power distribution pattern image related to a distribution of a power returning from the detected first object;
training (S30) a model based on the first power distribution pattern image and the first scenario description;
providing (S40) at least one second scenario description describing a second environment related to a second object;
generating (S50) at least one second power distribution pattern image related to a distribution of a power returning from the second object based on the trained model (20) and the second scenario description, wherein the step of generating the at least one second power distribution pattern image is in addition based on a noise value; and
sampling (S60) the second power distribution pattern image.

2. Method according to claim 1, wherein the step of converting the predefined radar reflection points into at least one first power distribution pattern image comprises:
converting each of the predefined radar reflection points into a third power distribution pattern image related to a distribution of a power returning from an area around the each of the predefined radar reflection points; and
merging the third power distribution pattern images to form the first power distribution pattern image.

3. Method according to claim 2, wherein the step of converting each of the predefined radar reflection points into a third power distribution pattern image comprises implementing a sine function using the each of the predefined radar reflection points as the variable of the sine function in the longitudinal and/or lateral direction corresponding to the relative position between the radar and the first object.

4. Method according to any of the preceding claims, wherein the first and second scenario description comprise spatial data related to the first and/or second object, in particular represented by a raster, and an object list, in particular with features of the first and/or second object.

5. Method according to any of the preceding claims, wherein the first and second scenario description are identical.

6. Method according to any of the preceding claims, wherein the step of training the model comprises training a deep neural network.

7. Method according to any of the preceding claims, wherein the noise value is randomly generated.

8. System for generating radar reflection points comprising an image conversion preparation unit (2) configured to provide a plurality of predefined radar reflection points of at least one first object detected by a radar and at least one first scenario description describing a first environment related to the detected first object,
an image conversion unit (4) configured to convert the predefined radar reflection points into at least one first power distribution pattern image related to a distribution of a power returning from the detected first object,
a training unit (6) configured to train a model based on the first power distribution pattern image and the first scenario description,
a scenario description providing unit (8) configured to provide at least one second scenario description describing a second environment related to a second object,
an image generation unit (10) configured to generate at least one second power distribution pattern image related to a distribution of a power returning from the second object based on the trained model and the second scenario description, wherein the scenario description providing unit (8) is adapted to generate the at least one second power distribution pattern image in addition based on a noise value, and
a sampling unit (12) configured to sample the second power distribution pattern image.

9. Computer program (200) comprising instructions (250) which, when the program (200) is executed by a computer, cause the computer to carry out the method of any of the claims 1 to 7.

## Patentansprüche

1. Verfahren zum Erzeugen von Radarreflexionspunkten, die folgenden Schritte umfassend:
Bereitstellen (S10, S12) einer Mehrzahl von im Voraus definierten Radarreflexionspunkten mindestens eines ersten Objekts, das durch ein Radar detektiert wurde, und wobei mindestens eine erste Szenarienbeschreibung eine erste Umgebung beschreibt, die zu dem detektierten ersten Objekt in Beziehung steht;
Umwandeln (S20) der im Voraus definierten Radarreflexionspunkte in mindestens ein erstes Leistungsverteilungsmusterbild, das zu einer Verteilung einer Leistung, die von dem detektierten ersten Objekt zurückkommt, in Beziehung steht;
Trainieren (S30) eines Modells basierend auf dem ersten Leistungsverteilungsmusterbild und der ersten Szenarienbeschreibung;
Bereitstellen (S40) mindestens einer zweiten Szenarienbeschreibung, die eine zweite Umgebung, die zu einem zweiten Objekt in Beziehung steht, beschreibt;
Erzeugen (S50) mindestens eines zweiten Leistungsverteilungsmusterbilds, das zu einer Verteilung einer Leistung, die von dem zweiten Objekt zurückkommt, in Beziehung steht, basierend auf dem trainierten Modell (20) und der zweiten Szenarienbeschreibung, wobei der Schritt des Erzeugens des mindestens einen zweiten Leistungsverteilungsmusterbilds zusätzlich auf einem Rauschwert basiert; und
Abtasten (S60) des zweiten Leistungsverteilungsmusterbilds.

2. Verfahren nach Anspruch 1, wobei der Schritt des Umwandelns der im Voraus definierten Radarreflexionspunkte in mindestens ein erstes Leistungsverteilungsmusterbild umfasst:
Umwandeln jeden der im Voraus definierten Radarreflexionspunkte in ein drittes Leistungsverteilungsmusterbild, das zu einer Verteilung einer Leistung, die von einem Gebiet um jeden der im Voraus definierten Radarreflexionspunkte zurückkommt, in Beziehung steht; und
Zusammenführen der dritten Leistungsverteilungsmusterbilder, um das erste Leistungsverteilungsmusterbild zu bilden.

3. Verfahren nach Anspruch 2, wobei der Schritt des Umwandelns jedes der im Voraus definierten Radarreflexionspunkte in ein drittes Leistungsverteilungsmusterbild umfasst, eine sinc-Funktion zu implementieren, die jeden der im Voraus definierten Radarreflexionspunkte als die Variable der sinc-Funktion in der Längs- und/oder Querrichtung korrespondierend mit der relativen Position zwischen dem Radar und dem ersten Objekt verwendet.

4. Verfahren nach einem der vorhergehenden Ansprüche, wobei die erste und zweite Szenarienbeschreibung räumliche Daten umfasst, die zu dem ersten und/oder zweiten Objekt in Beziehung stehen, insbesondere repräsentiert durch ein Raster und eine Objektliste, insbesondere mit Merkmalen des ersten und/oder zweiten Objekts.

5. Verfahren nach einem der vorhergehenden Ansprüche, wobei die erste und zweite Szenarienbeschreibung identisch sind.

6. Verfahren nach einem der vorhergehenden Ansprüche, wobei der Schritt des Trainierens des Modells umfasst, ein tiefes neuronales Netzwerk zu trainieren.

7. Verfahren nach einem der vorhergehenden Ansprüche, wobei der Rauschwert zufällig erzeugt wird.

8. System zum Erzeugen von Radarreflexionspunkten, umfassend eine Bildumwandlungs-Vorbereitungseinheit (2), konfiguriert zum Bereitstellen einer Mehrzahl von im Voraus definierten Radarreflexionspunkten mindestens eines ersten Objekts, das durch ein Radar detektiert wurde, und wobei mindestens eine erste Szenarienbeschreibung eine erste Umgebung beschreibt, die zu dem detektierten ersten Objekt in Beziehung steht,
eine Bildumwandlungseinheit (4), konfiguriert zum Umwandeln der im Voraus definierten Radarreflexionspunkte in mindestens ein erstes Leistungsverteilungsmusterbild, das zu einer Verteilung einer Leistung, die von dem detektierten ersten Objekt zurückkommt, in Beziehung steht,
eine Trainingseinheit (6), konfiguriert zum Trainieren eines Modells basierend auf dem ersten Leistungsverteilungsmusterbild und der ersten Szenarienbeschreibung,
eine Szenarienbeschreibungs-Bereitstellungseinheit (8), konfiguriert zum Bereitstellen mindestens einer zweiten Szenarienbeschreibung, die eine zweite Umgebung, die zu einem zweiten Objekt in Beziehung steht, beschreibt,
eine Bilderzeugungseinheit (10), konfiguriert zum Erzeugen mindestens eines zweiten Leistungsverteilungsmusterbilds, das zu einer Verteilung einer Leistung, die von dem zweiten Objekt zurückkommt, in Beziehung steht, basierend auf dem trainierten Modell und der zweiten Szenarienbeschreibung, wobei die Szenarienbeschreibungs-Bereitstellungseinheit (8) angepasst ist zum Erzeugen des mindestens einen zweiten Leistungsverteilungsmusterbilds zusätzlich basierend auf einem Rauschwert, und
eine Abtasteinheit (12), konfiguriert zum Abtasten des zweiten Leistungsverteilungsmusterbilds.

9. Computerprogramm (200), umfassend Anweisungen (250), die, wenn das Programm (200) durch einen Computer ausgeführt wird, den Computer veranlassen, das Verfahren nach einem der Ansprüche 1 bis 7 auszuführen.

## Revendications

1. Procédé de génération de points de réflexion radar comprenant les étapes suivantes :
la fourniture (S10, S12) d'une pluralité de points de réflexion radar prédéfinis d'au moins un premier objet détecté par un radar et d'au moins une première description de scénario décrivant un premier environnement lié au premier objet détecté ;
la conversion (S20) des points de réflexion radar prédéfinis en au moins une première image de diagramme de distribution de puissance liée à une distribution d'une puissance renvoyée par le premier objet détecté ;
l'apprentissage (S30) d'un modèle sur la base de la première image de diagramme de distribution de puissance et la première description de scénario ;
la fourniture (S40) d'au moins une deuxième description de scénario décrivant un deuxième environnement lié à un deuxième objet ;
la génération (S50) d'au moins une deuxième image de diagramme de distribution de puissance liée à une distribution d'une puissance renvoyée par le deuxième objet en fonction du modèle formé (20) et de la deuxième description de scénario, dans lequel l'étape de génération de l'au moins une deuxième image de diagramme de distribution de puissance est basée en outre sur une valeur de bruit ; et
l'échantillonnage (S60) de la deuxième image de diagramme de distribution de puissance.

2. Procédé selon la revendication 1, dans lequel l'étape de conversion des points de réflexion radar prédéfinis en au moins une première image de diagramme de distribution de puissance comprend :
la conversion de chacun des points de réflexion radar prédéfinis en une troisième image de diagramme de distribution de puissance liée à une distribution d'une puissance revenant d'une zone autour de chacun des points de réflexion radar prédéfinis ; et
la fusion des troisièmes images de diagramme de distribution de puissance pour former la première image de diagramme de distribution de puissance.

3. Procédé selon la revendication 2, dans lequel l'étape de conversion de chacun des points de réflexion radar prédéfinis en une troisième image de diagramme de distribution de puissance comprend la mise en œuvre d'une fonction sine en utilisant chacun des points de réflexion radar prédéfinis comme variable de la fonction sine dans la direction longitudinale et/ou latérale correspondant à la position relative entre le radar et le premier objet.

4. Procédé selon l'une quelconque des revendications précédentes, dans lequel les première et deuxième descriptions de scénario comprennent des données spatiales relatives au premier et/ou au deuxième objet, représentées en particulier par une trame, et une liste d'objets, en particulier avec des caractéristiques du premier et/ou du deuxième objet.

5. Procédé selon l'une quelconque des revendications précédentes, dans lequel les première et deuxième descriptions de scénario sont identiques.

6. Procédé selon l'une quelconque des revendications précédentes, dans lequel l'étape d'apprentissage du modèle comprend l'apprentissage d'un réseau neuronal profond.

7. Procédé selon l'une quelconque des revendications précédentes, dans laquelle la valeur de bruit est générée de manière aléatoire.

8. Système de génération de points de réflexion radar comprenant
une unité de préparation de conversion d'image (2) configurée pour fournir une pluralité de points de réflexion radar prédéfinis d'au moins un premier objet détecté par un radar et au moins une première description de scénario décrivant un premier environnement lié au premier objet détecté,
une unité de conversion d'image (4) configurée pour convertir les points de réflexion radar prédéfinis en au moins une première image de diagramme de distribution de puissance liée à une distribution d'une puissance renvoyée par le premier objet détecté,
une unité d'apprentissage (6) configurée pour former un modèle sur la base de la première image de diagramme de distribution de puissance et de la première description de scénario,
une unité de fourniture de description de scénario (8) configurée pour fournir au moins une deuxième description de scénario décrivant un deuxième environnement lié à un deuxième objet,
une unité de génération d'images (10) configurée pour générer au moins une deuxième image de diagramme de distribution de puissance liée à une distribution d'une puissance revenant du deuxième objet en fonction du modèle formé et de la deuxième description de scénario, dans lequel l'unité de fourniture de description de scénario (8) est adaptée pour générer de plus l'au moins une deuxième image de diagramme de distribution de puissance sur la base d'une valeur de bruit, et
une unité d'échantillonnage (12) configurée pour échantillonner la deuxième image de diagramme de distribution d'énergie.

9. Programme d'ordinateur (200) comprenant des instructions (250) qui, à l'exécution du programme (200) par un ordinateur, amènent l'ordinateur à mettre en œuvre le procédé selon l'une quelconque des revendications 1 à 7.
